# EUROPEAN PATENT SPECIFICATION

(11) **EP 2 786 030 B1**
(45) Date of publication and mention of the grant of the patent: **15.11.2017**
(21) Application number: 12795020.2
(22) Date of filing: 20.11.2012
(51) Int. Cl.: F16C 27/06, F16C 37/00, F16C 32/06

(54) **GAS BEARING SPINDLES AND GAS BEARING ASSEMBLIES FOR GAS BEARING SPINDLES**
GASLAGERSPINDELN UND GASLAGERBAUGRUPPEN FÜR GASLAGERSPINDELN
AXES À PALIER À GAZ ET ENSEMBLES PALIER À GAZ POUR AXES À PALIER À GAZ

(30) Priority: 29.11.2011 GB 201120593; 15.05.2012 GB 201208599
(43) Date of publication of application: 08.10.2014
(73) Proprietor: Novanta Technologies UK Limited, Poole, Dorset BH16 6LN (GB)
(72) Inventor: SPICER, Neil, Winborne Dorset BH21 3NQ (GB); BEESLEY, Chris, Swanage Dorset BH19 3DG (GB)
(74) Representative: Faulkner, Thomas John
(86) International application number: PCT/GB2012/000849
(87) International publication number: WO 2013/079896

(56) References cited:
- EP-B1- 2 242 935

## Description

This invention relates to gas bearing spindles and gas bearing assemblies for gas bearing spindles.

Of particular interest are gas bearing spindles which are suitable for use in high speed drilling applications for example in PCB (Printed Circuit Board) drilling. In PCB drilling machines there is a desire to have a machine which is capable of drilling holes over a large range of different diameters and correspondingly over a large range of different speeds. Thus for example, it would be desirable to provide a machine which would be able to, for example, at one end of the scale drill 6.3mm diameter holes at speeds of say 15,000-20,000 rpm and at the other end of the scale still be able to drill say 0.1 mm to 0.2mm diameter holes at say 200,000 rpm or 300,000 rpm. Further, such holes need to be drilled with a high degree of accuracy and in general terms, the provision of good quality holes in the printed circuit board is required.

When drilling at most, if not at all, speeds then radial and/or axial vibration in the device can tend to lower the quality of the holes which are drilled. The provision of damping to damp such vibrations can significantly help to reduce this problem.

In addition, this damping may allow the shaft to achieve a significantly greater top speed, by suppressing the onset of half speed whirl within the bearing gas film. (Half speed whirl is a well understood resonance condition that occurs in supercritical aerostatic bearings systems, the onset of which usually results in spindle failure due to the unstable nature of the gas film. This occurs at approximately twice the bearing gas film critical speed).

One existing method for providing damping is to mount the bearings of the spindle on elastomeric O rings. In such a case, in principle, the bearings are allowed to move radially and axially on the O rings with shaft motion within set constraints. Thus, vibration energy created during a drilling process can be absorbed by the continuous deformation of the O ring material giving good damping of the shaft. However, a draw back in applying this technology to PCB spindles is that at the high speeds needed to drill the very small holes, considerable heat is generated inside the bearings due to gas film shear. One approach to overcome this problem is to provide cooling, for example, water cooling to prevent overheating and to control thermal expansion of the air film gap.

This however, is not without difficulties - cooling needs to be provided to the right place and damping effects need to be retained.

The applicants developed a spindle to provide at least some of this functionality in which an inner bearing portion is supported in O rings relative to a housing portion and the inner bearing portion has in effect an internal coolant channel. This is by virtue of the inner bearing portion having an intermediate portion and an inner shell bearing portion and a coolant channel provided therebetween. Such a spindle is shown in Figure 2 and described in more detail further below. Such a spindle is also described in EP 2242935 B1. In some circumstances, however, with this design a problem occurs in that under extreme load or in failure mode the inner bearing portion may rotate relative to the housing portion which in turn can destroy the integrity of the coolant feed path and/or gas feed path and lead to a catastrophic failure in the bearing spindle.

The present invention is directed at providing apparatus where spindle failure can be guarded against and cooling can be provided whilst not removing desirable damping within the spindle.

According to one aspect of the present invention there is provided a gas bearing assembly for a gas bearing spindle, the assembly comprising a housing portion and an inner radial bearing portion disposed within and resiliently mounted relative to the housing portion, the inner radial bearing portion comprising an inner shell bearing portion having a bearing face, and an intermediate sleeve portion which is disposed between the inner shell bearing portion and the housing portion, wherein a liquid coolant channel is provided between the inner bearing shell portion and the intermediate sleeve portion,
the assembly further comprising an anti-rotation plug which is received in both the housing portion and the inner bearing portion to couple the housing portion and the inner bearing portion against relative rotation. Optionally there may be a resilient member provided between the plug and at least one of the housing portion and the inner bearing portion so that there is resilience in the coupling between the housing portion and the inner bearing portion formed by the plug.

Such an arrangement can help prevent undesirable rotation between the bearing parts, without damaging the effectiveness of a resilient mounting between the housing portion and the inner radial bearing portion. In at least some circumstances the effectiveness of the resilient mounting may be maintained without the provision of a resilient member between the plug and housing portion/inner bearing portion.

The resilient member provided between the plug and at least one of the housing portion and the inner bearing portion may comprise an O ring carried on the plug.

The O ring may act as a seal. This may be to seal against the leakage of gas and/or coolant provided in the bearing assembly.

The plug may extend radially from the housing portion into the inner bearing portion. The plug may extend axially from the housing portion into the inner bearing portion.

In currently preferred embodiments the plug is a blank plug. In alternatives the plug may have a through hole which may be generally axial. The through hole may be part of a fluid feed path in the bearing assembly. The through hole may form part of a coolant feed for feeding coolant to the coolant channel. The through hole may form part of a gas feed for feeding gas to the bearing face.

A pair of resilient members may be provided between the plug on the one hand and the housing portion and the inner bearing portion on the other hand. One of the resilient members may be provided between the plug and the housing portion and the other may be provided between the plug and the inner bearing portion.

In such a case both resilient members may act as seals and provide resilience in the coupling. However, in some cases one or each of the resilient members might only provide one of these functions. Thus there might, for example, be a rigid connection between the plug and say the housing portion and a resilient member provided between these two to act as a seal, whereas the resilient member provided between the plug and the inner bearing portion provides resilience in the coupling.

Where there is a pair of resilient members acting as seals, a first in the pair may be provided to seal against the leakage of gas and a second may be provided to seal against the leakage of coolant.

Thus one seal may ensure that the integrity of a coolant feed path is not compromised by the plug and the other seal may ensure that the integrity of a gas feed path is not compromised by the plug.

A pair of anti-rotation plugs may be provided which may be diametetrically opposed.

The or each plug may be provided axially centrally relative to the bearing face. The or each plug may be axially aligned with the coolant channel. The or each plug may be provided axially symmetrically relative to the bearing face.

The or each plug may be a push fit in the housing portion and/or the inner bearing portion. The plug may be retained in position by virtue of housing portion being received in a bore of a spindle body portion, with a head of the plug contacting with the wall of the bore.

The liquid coolant channel may be partly defined by a surface of the intermediate sleeve portion. The liquid coolant channel may be partly defined by a surface of the inner shell bearing portion.

At least one resilient damping member may be provided between the inner radial bearing portion and the housing portion. Such a member can provide or at least facilitate the resilient mounting between the inner radial bearing portion and the housing portion.

The at least one resilient damping member may be disposed so as to surround the inner radial bearing portion. The at least one resilient damping member may be disposed on the intermediate sleeve portion.

Preferably there is a pair of resilient damping members disposed between the housing portion and the inner radial bearing portion, and surrounding the inner radial bearing portion. The resilient damping members in the pair may be axially spaced from one another. The resilient damping members in the pair may be disposed towards respective opposite ends of the inner radial bearing portion. The pair of resilient damping members may be disposed on the intermediate sleeve portion.

At least one damping O ring may be disposed between the housing portion and the inner radial bearing portion. The at least one damping O ring may provide, or at least contribute towards, the resilient mounting between the housing portion and the inner radial bearing portion.

The at least one damping O ring may be disposed so as to surround the inner radial bearing portion. The at least one damping O ring may be disposed with its axis generally parallel to, preferably generally co-incident with, the axis of the inner radial bearing portion. The at least one damping O ring may be disposed on the intermediate sleeve portion.

Preferably there is a pair of damping O rings disposed between the housing portion and the inner radial bearing portion, and surrounding the inner radial bearing portion. The damping O rings in the pair may be axially spaced from one another. The damping O rings in the pair may be disposed towards respective opposite ends of the inner radial bearing portion. The pair of damping O rings may be disposed on the intermediate sleeve portion.

The inner shell bearing portion may be generally annular. The intermediate portion may be generally annular.

The inner shell portion may fit closely inside the intermediate portion - this may be an interference fit.

The housing portion may have a bore in which the inner radial bearing portion is disposed, with the inner radial bearing portion having an outer curved surface facing the wall of the bore and a clearance being provided between the outer curved surface of the inner radial bearing portion and the bore. The outer curved surface of the inner radial bearing portion may be an outer curved surface of the intermediate portion. The clearance may be maintained by the at least one resilient damping member.

The bore may be a cylindrical bore. The outer curved surface of the inner radial bearing portion may be a cylindrical surface.

The liquid coolant channel which is provided between the inner bearing shell portion and the intermediate sleeve portion may have an outlet which is at the outer curved surface of the inner radial bearing portion.

The liquid coolant channel which is provided between the inner bearing shell portion and the intermediate sleeve portion may have an inlet which is at the outer curved surface of the inner radial bearing portion.

The gas bearing assembly may comprise at least one auxiliary O ring which is disposed around an inlet to or an outlet from the liquid coolant channel which is provided between the inner bearing shell portion and the intermediate sleeve portion. There may be a pair of auxiliary O rings - one disposed around an inlet to the liquid coolant channel and one disposed around an outlet from the liquid coolant channel. The or each auxiliary O ring may be disposed on the intermediate sleeve portion. The or each auxiliary O ring may be disposed with its main axis transverse to the axis of the gas bearing assembly. The main axis of the or each auxiliary O ring may be oriented along a radius of the gas bearing assembly.

Similarly an auxiliary O ring may be provided around a bore in the outer curved surface of the inner bearing portion, particularly the intermediate portion, which is provided to receive the anti-rotation plug.

In an alternative where the anti-rotation plug has a through hole and is arranged as part of the coolant feed to feed the coolant channel, the auxiliary O ring may be dispensed with and functionally replaced with an O ring provided on the plug which seals with the inner bearing portion, specifically the intermediate portion. There can be two such plugs, one for coolant inlet and one for coolant outlet.

In general terms sealing means may be provided for effecting a seal between the housing portion and the inner radial bearing portion. The O rings and/or auxiliary O rings may be provided for effecting a seal between the housing portion and the inner radial bearing portion.

Sealing means may be provided between the inner shell bearing portion and the intermediate sleeve portion. Sealing O rings may be provided between the inner shell bearing portion and the intermediate sleeve portion.

The bearing face will typically comprise at least one series of gas outlets for supplying gas to create a gas film between the bearing face and a shaft disposed in the bearing assembly.

Each gas outlet may comprise a jet.

A respective pair of axially spaced seals, for example sealing O rings, may be provided in the inner radial bearing portion for the or each series of gas outlets, with one seal in the pair disposed on one side of the series of gas outlets and another seal in the pair disposed on the other side of the series of gas outlets.

The bearing assembly may comprise two series of gas outlets which series are axially spaced from one another with the liquid coolant channel axially between the two series of gas outlets.

Seals, for example the above mentioned O rings, can together provide sealing to provide gas paths through the bearing assembly to the or each series of gas outlets and a liquid path through the bearing assembly to the liquid coolant channel.

The liquid coolant channel may be an annular channel, which may have an axis which is coincident with the main axis of the bearing assembly.

The gas bearing assembly may comprise an axial bearing portion. The gas bearing assembly may comprise a second liquid coolant channel, which channel is provided in the region of the axial bearing portion and which is in fluid communication with the liquid coolant channel provided between the inner bearing shell portion and the intermediate sleeve portion. The second liquid coolant channel may be an annular channel.

The gas bearing assembly may comprise a resilient electrical contact element for electrically connecting the housing portion to the inner radial bearing portion.

The contact element should be arranged so as to not significantly affect the resilient mounting of the inner radial bearing portion, whilst providing an electrical path through the bearing assembly for use in electrical tool touch down techniques which are often used in drilling and other machining processes.

An initial candidate for such a contact element would be a carbon filament brush. However, it has been found that such a brush is undesirable as due to wear and/or maintenance filaments tend to be lost which can then get caught in an O ring seal and can cause water leaks. Thus preferably the resilient electrical contact element comprises a compression spring.

In some circumstances the inner shell bearing may be formed in two parts which are shrink fitted together.

The gas bearing assembly may be an aerostatic gas bearing assembly.

According to another aspect of the present invention there is provided a gas bearing spindle comprising a gas bearing assembly as defined above and a shaft journalled within the bearing assembly.

Embodiments of the present invention will now be described, by way of example only, with reference to the accompanying drawings in which:
Figure 1 schematically shows part of a first drilling spindle which is useful in understanding the invention;
Figure 2 schematically shows a second drilling spindle which is useful in understanding the invention;
Figure 3 schematically shows a bearing assembly of the spindle shown in Figure 2;
Figure 4A and 4B schematically show an intermediate sleeve of the bearing assembly shown in Figure 3 and an O ring groove provided in that sleeve;
Figures 5A and 5B schematically show modified versions of the bearing assembly shown in Figure 3 which include resilient electrical contact elements;
Figure 6A and 6B schematically show part of a third drilling spindle which embodies the present invention;
Figure 7A and 7B schematically show part of a fourth drilling spindle which embodies the present invention;
Figures 8A and 8B schematically show part of a fifth drilling spindle which embodies the present invention; and
Figures 9A and 9B schematically show part of another modified bearing assembly which embodies the present invention.

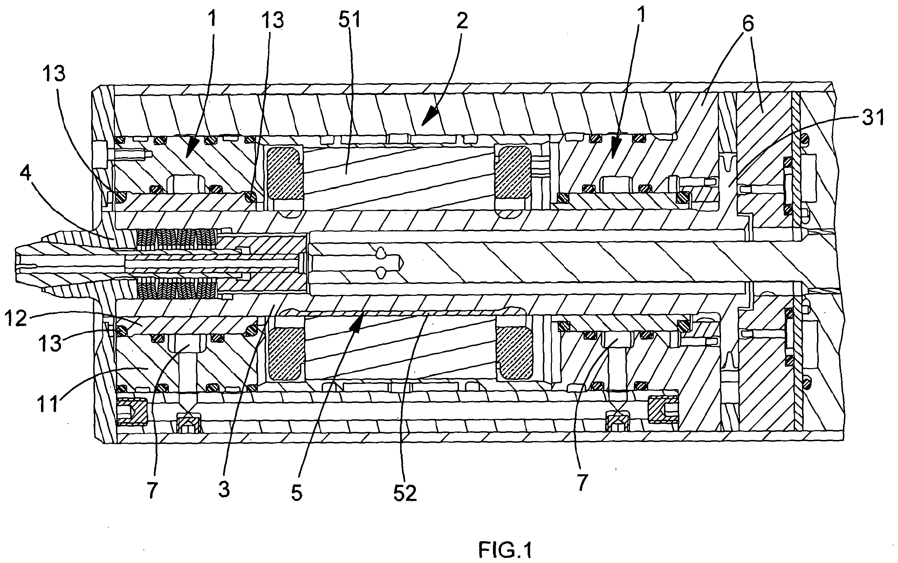

Figure 1 schematically shows part of a high speed PCB drilling spindle which in many respects is conventional. The PCB drilling spindle is an air bearing spindle and comprises two radial air bearing assemblies 1 housed within a body portion 2 of the spindle. A shaft 3 carrying a tool holder 4 is journalled within the radial air bearings 1. A motor 5 made up of a stator 51 disposed in the body portion 2 and windings 52 laid in to the shaft 4 is provided for rotatingly driving the shaft 4 relative to the body portion 2. The tool holder 4 is arranged for holding a tool, in this instance a drilling tool for drilling holes in PCB material. An axial air bearing arrangement 6 is provided which acts on a thrust runner 31 which is provided at the end of the shaft 3 remote from the tool holder 4.

To the degree which the drilling spindle of Figure 1 has been described above, it is conventional. Thus detailed description of its general structure and operation is omitted from this specification for the sake of brevity. It will be appreciated that there is a well established art in providing air bearing spindles including suitable air bearings and a motor drive together with a tool holder for holding the tool which is to be driven.

The present application is concerned mainly with the structure and functioning of some aspects of the bearings 1, 6 which may be provided in such a spindle.

In each of the radial air bearing assemblies 1 of the spindle shown in Figure 1 there are two main components. The first is an outer bearing housing portion 11 within which is mounted an inner shell bearing portion 12. Both the outer bearing housing portion 11 and inner shell bearing portion 12 are generally annular components. Thus the inner shell bearing 12 is mounted within the bore of the outer bearing housing portion 11. However, a significant clearance is provided between the outer curved surface of the inner shell bearing portion 12 and the inner curved surface of the bore of the outer bearing portion 11.

The inner shell bearing portion 12 is mounted to the outer bearing housing portion 11 via a pair of O rings 13. One of the O rings is provided towards one end of the bearing assembly 1 and the other O ring 13 is provided towards the other end of the bearing assembly 1. These O rings 13 serve to support the inner shell bearing portion 12 within the outer bearing housing portion 11 in a resilient manner.

Because of the clearance between these two portions 11, 12 mentioned above, and the resilient nature of the O rings 13, the inner shell bearing portion 12 has some freedom of movement in both the axial and radial direction relative to the outer bearing housing portion 11.

Of course as any such movement takes place, the O rings 13 will be deformed. This arrangement is true of both of the bearing assemblies 1 provided in the spindle of Figure 1.

Thus, as the shaft 3 tends to vibrate during operation of the spindle, the inner shell bearing portion 12 can move on the O rings 13, and the O rings 13 can absorb this vibrational energy and thus damp the vibrations in the shaft 3. This in turn can lead to better drilling performance. As alluded to in the introduction to this specification there are existing systems making use of such damping.

In the present spindle however, annular water cooling channels 7 are provided within the bearing assemblies 1 to allow coolant, specifically in this case, water, to be supplied to the coolant channels 7 via appropriate channelling to provide cooling of the bearing assembly 1 and in particular cooling of the inner shell bearing portion 12.

Initially it would be considered that such an arrangement would give rise to improved performance in the bearing assemblies 1 and hence the spindle as a whole.

However, it has been found that the provision of coolant in such channels has an extremely detrimental effect on the damping performance of the bearing assemblies 1. This is because once the annular coolant channels 7 are filled with water they act as a solid transmitter of energy from the inner shell bearing portion 12 to the outer bearing housing 11 dramatically reducing the effect of the O ring 13 damping. Furthermore, the higher the water pressure inside the bearing, the lower the net damping achieved.

Thus, whilst at first sight the arrangement of the spindle shown in Figure 1 would be considered to be attractive, the reality is rather different.

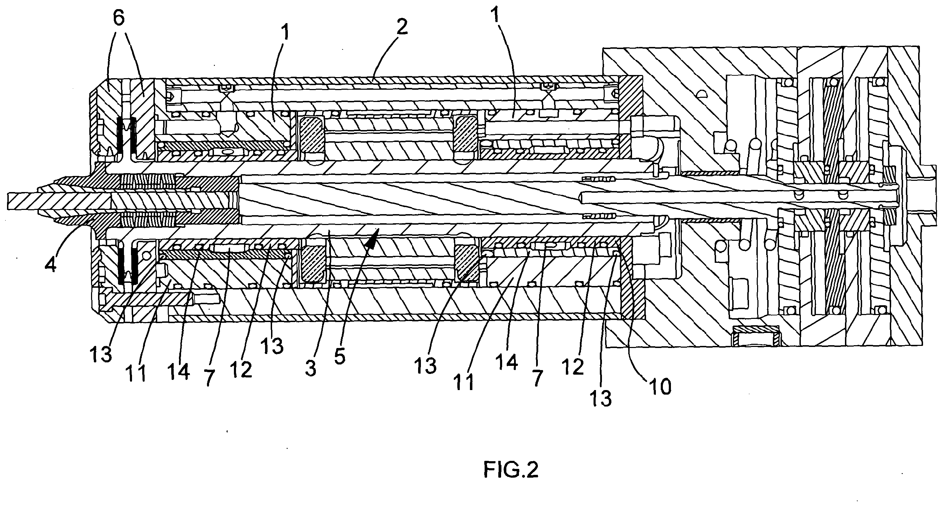

Figures 2 to 4 relate to an existing improved apparatus of the applicants where cooling can be achieved without the significant detrimental effect on damping seen in the apparatus of Figure 1.

Figure 2 shows a PCB drilling spindle useful in understanding the present invention. This PCB drilling spindle is intended to be usable for high speed drilling at for example speeds up to around 200,000 rpm or 300,000 rpm but also to be useable at relatively low speeds such as 15,000 to 20,000 rpm.

Much of the design and construction of the spindle shown in Figure 2 is conventional and is similar to that described above in relation to Figure 1.

Thus again, the spindle comprises a pair of radial air bearing assemblies 1 mounted within a spindle body 2. A shaft 3 carrying a tool holder 4 is journalled within the radial air bearings 1. Again a motor 5 is provided for rotatingly driving the shaft and hence the tool holder 4 and any carried tool relative to the main body 2 of the spindle. Again an axial bearing arrangement 6 is provided which acts on a thrust runner 31 which, in this instance, is provided at the same end of the shaft 3 as is the tool holder 4.

The radial air bearing assemblies 1 in the present spindle as shown in Figure 2 differ from those in the spindles shown in Figure 1. The front bearing assembly 1 disposed in the same region of the spindle as is the tool holder 4 is similar to, although not identical to, the rear bearing assembly 1 provided at the other end of the spindle.

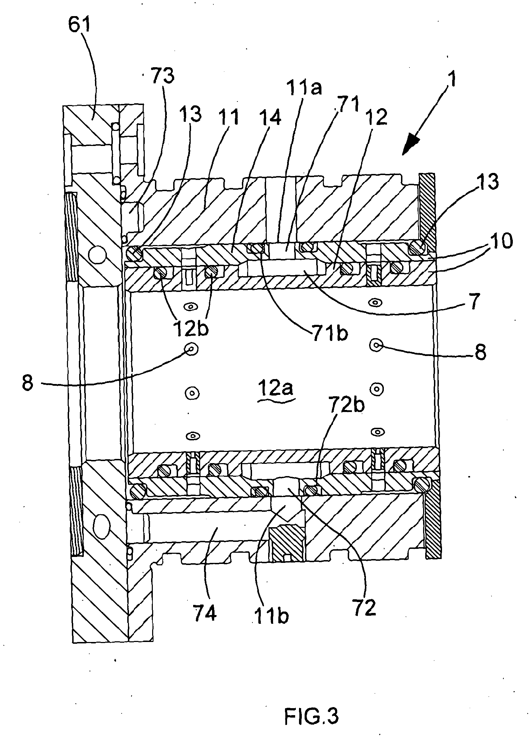

More detail of the front bearing assembly 1 is shown in Figure 3. The front bearing assembly 1 will be described in greater detail below with reference to Figures 2, 3 and 4.

In the front bearing assembly 1 of the spindle shown in Figure 2 there is again an outer bearing housing portion 11 within which is mounted an inner shell bearing portion 12. However in this instance an intermediate sleeve portion 14 is provided between the shell bearing portion 12 and the outer bearing housing portion 11. The inner shell bearing portion 12 and intermediate sleeve portion 14 can together be considered to make up an inner bearing portion 10.

Again, in this case the outer bearing housing portion 11 is generally annular and has a bore within which the inner bearing portion 10 is provided. Furthermore, the inner shell bearing portion 12 in the spindle of Figure 2 is generally annular and the intermediate sleeve portion 14 is again generally annular. The intermediate sleeve portion 14 is shrink fitted on to the inner shell bearing portion 12.

The inner bearing portion 10 is resiliently mounted within the outer bearing housing portion 11 in an analogous way to the way in which the inner shell bearing portion 12 is mounted within the outer bearing housing portion 11 in the spindle of Figure 1. Thus the inner bearing portion 10 is mounted in the outer bearing housing portion 11 via O rings 13 and there is a clearance between the outer curved wall of the inner bearing portion 10 and the inner curved wall of the bore in the outer bearing housing portion 11.

In this device a coolant channel in the form of an annular groove 7 is provided in the inner bearing portion 10. Specifically this coolant channel 7 is provided between the inner shell bearing portion 12 and the intermediate sleeve portion 14. The coolant channel 7 is defined by surfaces of the inner shell bearing portion 12 on the one hand and the intermediate sleeve portion 14 on the other hand. Thus the coolant channel 7 is, to all intents and purposes, shielded from the outer bearing housing portion 11 by the intermediate sleeve 14 which resides between the coolant channel 7 and the outer bearing housing portion 11. This means that there is no direct, or one might say no mechanical, contact between the coolant provided within the coolant channel in use and the surface of the bore of the outer bearing housing portion 11.

Of course however, water must be fed into and out of the annular coolant channel 7 provided in the inner bearing portion 10. Thus an inlet 71 of the coolant channel 7 is in register with a supply port 11a provided in the outer bearing housing portion 11 and an outlet 72 of the coolant channel 7 is in register with an exhaust port 11b in the outer bearing housing portion 11. Thus water may be fed into the coolant channel via the inlet port 11a, flow around the channel 7 and then out of the channel 7 via the outlet 72 into the exhaust port 11b.

It should be noted that the coolant channel 7 extends all the way around the inner bearing portion 10. In the present device the inlet 71 into the channel 7 is diametrically opposed to the outlet 72 and thus the coolant flows into the inlet 71 and then splits into two paths and flows around both sides of the bearing assembly before meeting again at the outlet 72 to exit the inner bearing portion 10.

A second coolant channel 73 is provided in the front radial bearing assembly 1 in the outer bearing housing portion 11. This second coolant channel 73 is provided for cooling the axial bearing arrangement 6. An axial bearing plate 61 of the axial bearing arrangement 6 abuts the outer bearing housing portion 11 of the front radial bearing assembly 1 and the second coolant channel 73 is formed as an annular groove in a surface of the outer bearing housing portion 11 which faces and abuts with the axial bearing plate 61.

The second coolant channel 73 is in fluid communication with the first coolant channel 7 via a supply channel 74 which runs in an axial direction within the outer bearing housing portion 11 to connect the exhaust port 11b to the second coolant channel 73. Thus in use, water which flows first of all into and through the first coolant channel 7 provided in the inner bearing portion 10 then flows out of the inner bearing portion 10 and into the second coolant channel 73 via the supply channel 74.

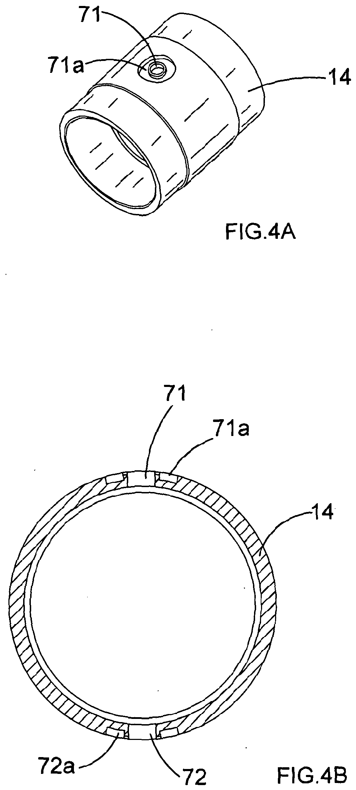

Figures 4A and 4B schematically show the intermediate sleeve 14 of the front radial bearing assembly 1. In particular they illustrate the inlet 71 and outlet 72 for the coolant channel 7. Surrounding the inlet 71 and outlet 72 are a respective O ring grooves 71a, 72a which each house a respective O ring 71b, 72b (see Figure 3). These O rings 71b, 72b act as a seal around the inlet and outlet respectively 71, 72 against the wall of the bore of the outer bearing housing portion 11 which they face .. as can be seen in Figure 3.

As mentioned above, the O rings 13 provided at each end of the inner bearing portion 10 provide resilient mounting of the inner bearing portion 10 relative to the outer bearing housing portion 11 to provide the required damping. The O rings 71b, 72b provided around the inlet and outlet 71, 72 need to provide a seal between the inlet port 11a and the inlet 71 and between the outlet 72 and the exhaust port 11b without destroying this resilient mounting. This can be achieved by ensuring that there is a suitable clearance between the surfaces of the intermediate sleeve 14 and the bore of the outer bearing housing portion 11 at that region and choosing suitable O rings 71b, 72b.

Here it is noted that whilst the intermediate sleeve 14 is annular and has a generally cylindrical outer surface, the thickness of the annulus is not constant along the axial length of the sleeve 14. In particular the sleeve 14 is larger in outside diameter in a central band in which the inlet 71 and outlet 72 are formed. Thus the outer curved surface of the sleeve 14 is stepped. As seen in Figure 3 this leads to a smaller clearance between the sleeve 14 and the bore of the outer bearing housing portion 11 in the central region of the bearing assembly 1, ie in the region of the inlet 71 and outlet 72.

It will be noted that whilst the O rings 71b, 72b around the inlet and outlet 71, 72 are arranged on the outer surface of the intermediate sleeve portion 14 with an orientation such that the axis of the O rings lies substantially along a radius of the bearing assembly, the main damping O rings 13 are provided so as to surround the inner bearing portion 10 and surround the intermediate sleeve portion 14 and are orientated so that their main axis is generally coincident with the axis of the bearing assembly 1.

Of course it will be remembered that the radial bearing assembly 1 is an air bearing assembly. Thus there needs to be sealing of air supply paths for supplying air into the air bearing as well as sealing of appropriate water channels through the bearing assembly for cooling.

In this respect it should be noted that the damping O rings 13 provided at either end of the bearing assembly 1 and the sealing O rings 71b, 72b provided around the inlet and outlet 71, 72 also provide a sealing function for providing suitable air supply channels to the air bearing.

As can be seen in Figure 3, the bearing assembly comprises two series of jets 8 which are provided in a bearing face 12a of the inner shell bearing portion 12. In operation, the jets 8 provide air into the air bearing to create the necessary gas film between the bearing face 12a and the shaft 3. It can be noted that the series of jets 8 are spaced axially from one another and the coolant channel 7 and the inlet and outlet 71, 72 of the coolant channel 7 are disposed axially between the two series of jets.

Further sealing O rings 12b are provided on either side of the series of jets between the inner shell bearing portion 12 and the intermediate sleeve portion 14. Each of these pairs of O rings 12b provide a seal for the air feed towards the jets 8. Again these sealing O rings 12b are orientated so as their axes are generally coincident with the main axis of the bearing assembly 1.

The above description has been in relation to the front radial bearing assembly 1 which is in the region of the spindle also occupied by the tool holder 4. However, in most respects the above description is equally applicable to the rear radial bearing assembly 1. In particular this again this has a similar arrangement of an inner shell bearing portion 12 surrounded by an intermediate sleeve portion 14 which in turn is disposed within an outer bearing housing portion 11. Again a coolant channel 7 is provided between the intermediate sleeve portion 14 and the inner shell bearing portion 12. The main difference between the two radial bearing assemblies 1 in the present device resides merely in the fact that the rear bearing assembly 1 does not include the second coolant channel 73 as it is not in proximity with the axial bearing arrangement 6.

Together the two radial bearing assemblies 1 allow water cooling of the bearings whilst still providing vibration damping in operation of the spindle.

Whilst the above description is written in terms of using the current ideas in PCB drilling applications, it should be noted that the ideas can be used in bearings for other machining applications. Such machining applications may or may not involve the use of high speeds of the type mentioned above and may or may not involve operation of the machine over a wide range of operational speeds as mentioned above.

In PCB drilling and other machining processes the machine is often provided with a tool touch down detection system for detecting the exact point at which the drill tip (or other tool) first makes contact with the work piece, for example piece of PCB. In general these tool touch down systems make use of electrical detection and work on the basis that an electrical circuit is made when the tool makes contact with the work piece. In general, for such detection systems to work, there needs to be a conduction path through the machining spindle and in particular through the bearing assembly.

In most conventional bearing assemblies there is a ready made electrically conductive path through the spindle due to the construction of the spindle and bearing assembly.

However, in bearing assemblies of the type shown in Figure 3 and included in the spindle shown in Figure 2 this electrical conduction path is broken by the provision of the resilient O ring mountings 13 between the outer bearing housing portion 11 and inner bearing portion 10 or more specifically between the outer bearing housing portion 11 and the intermediate sleeve portion 14.

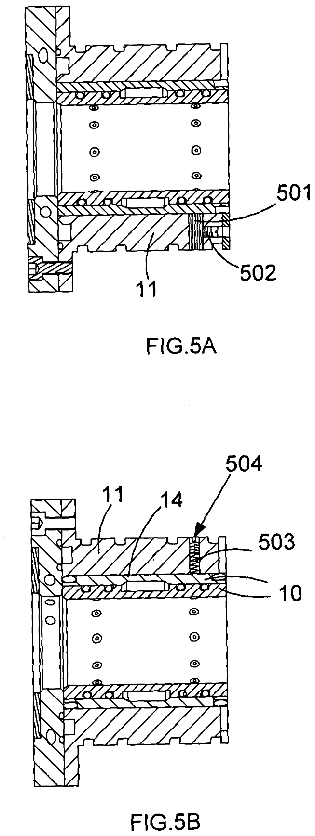

Figures 5A and 5B schematically show modified forms of the bearing assembly shown in Figure 3 which are designed with the aim of restoring this electrical conduction path through the bearing assembly and hence through the drilling spindle as a whole.

Figure 5A shows a first modified bearing assembly which is the same as the bearing assembly shown in Figure 3 in almost all respects. However it is shown along a different section than in Figure 3 and is modified by the provision of a carbon brush 501 which is mounted in the outer bearing housing portion 11 and is locked in position by an axial grub screw 502 which is sealed in position using an instant glue. The carbon brush 501 comprises a plurality of carbon brush filaments or fibres which are captured in a copper holder. The carbon filaments are flexible and thus do not interfere adversely with the resilient mounting between the outer bearing housing portion 11 and the inner bearing portion 10. Further they provide good electrical contact.

However it has been found that during use and/or maintenance there is a tendency for one or more filaments from the brush to become loose. Once such a filament is loose it may be trapped in one of the O ring seals in an assembly particularly if the assembly is dissembled for maintenance or so on. Such a trapped filament will tend to cause water leakage as it interferes with the seal provided by the affected O ring.

Figure 5B shows a currently preferred modified version of the bearing assembly shown in Figure 3. Here again a resilient electrical contact element is provided to electrically connect the outer bearing housing portion 11 to the inner bearing portion 10. However in this case a helical compression spring 503 is provided in the outer bearing housing portion 11. The spring 503 is provided in a radial hole in the outer bearing housing portion 11 and is loaded against the inner bearing portion 10 and in particular against the intermediate sleeve portion 14 by a locking grub screw 504. This grub screw is then sealed in position with an instant glue. The helical compression spring 53 thus restores electrical connectivity through the bearing assembly and does not exhibit the problems associated with the carbon fibre brush included in the first modified version of the bearing assembly as shown in Figure 5A. In an alternative, the arrangement could be reversed, with the spring mounted on the inner bearing portion. Further if considered necessary more than one such contact element may be provided.

The following potentially useful aspects of the above designs were identified.

Provided that the inner bearing portion 10 and outer bearing housing portion 11 are arranged so that the inner bearing portion 10 can rotate relative to the outer bearing housing portion under abnormal loads, the risk and/or extent of damage which occurs if the spindle fails, for example crashes or jams, can be reduced. The O rings in the assembly will resist relative rotation of the inner bearing portion 10 and outer bearing housing portion 11 in normal use. However under extreme load there can be some rotational give which can help reduce damage.

Due to the structure of the bearing assembly if damage occurs to the inner bearing portion 10 (the inner shell 12 and/or intermediate sleeve 14) these may be replaced if the remainder of the bearing is undamaged. This is obviously cheaper than replacing the whole bearing assembly.

Whilst the ability of the inner bearing portion 10 to rotate relative to the outer bearing housing portion 11 was seen as a potential advantage of the drilling spindles described above, in actual practice the fact that this relative rotation could occur has proven to be problematic in some circumstances. In particular if such relative rotation occurs then the integrity in the coolant feeding path for feeding coolant into the inner bearing portion can be broken such that coolant may escape into the bearing. Furthermore if the air supply to the air bearings is cut once relative rotation has occurred such that there is no pressure in the air feed paths, water can enter into the air feed paths and other parts of the bearing and this can cause catastrophic failure of the bearing and/or the spindle. Thus the applicants have sought to develop a further modified drilling spindle which aims at reducing or removing this problem whilst not compromising the performance of the bearings and in particular their resilient damping characteristics.

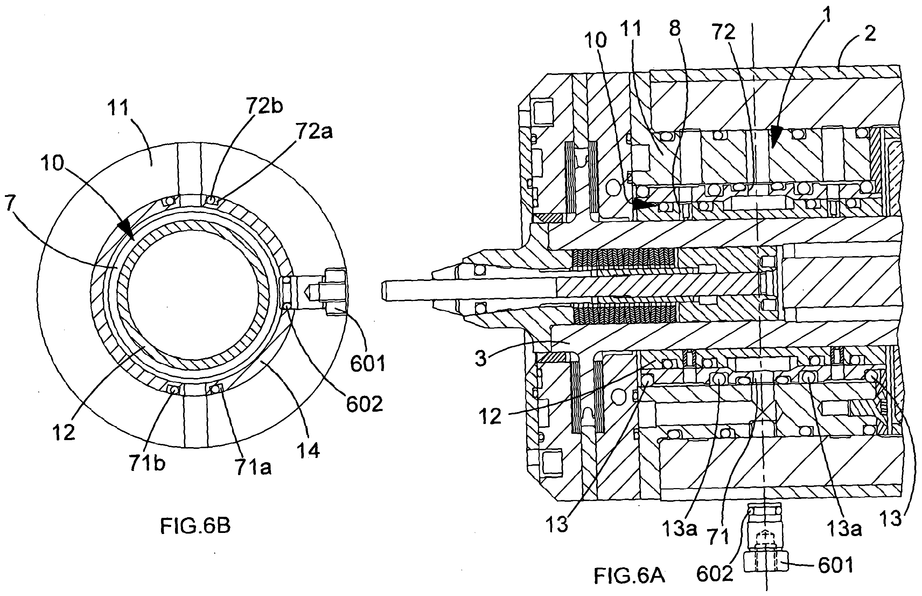

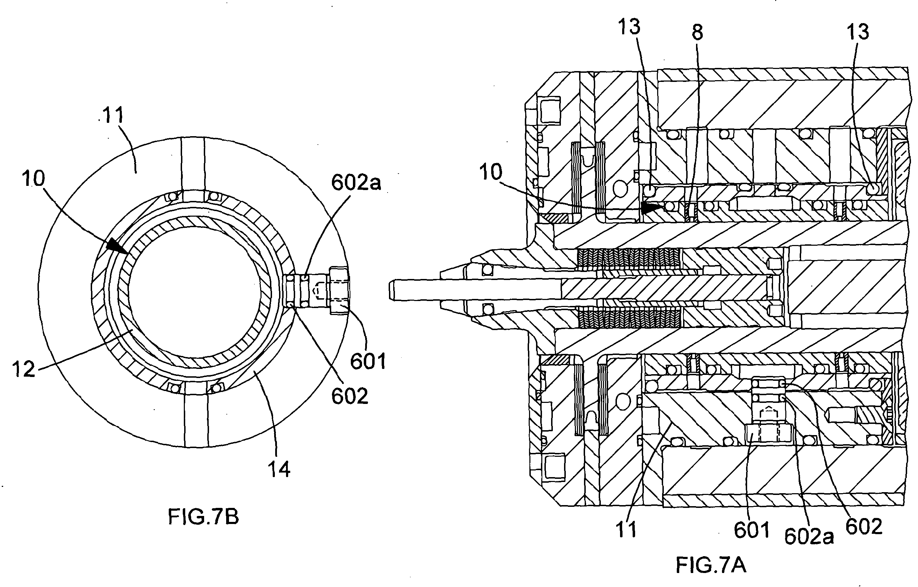

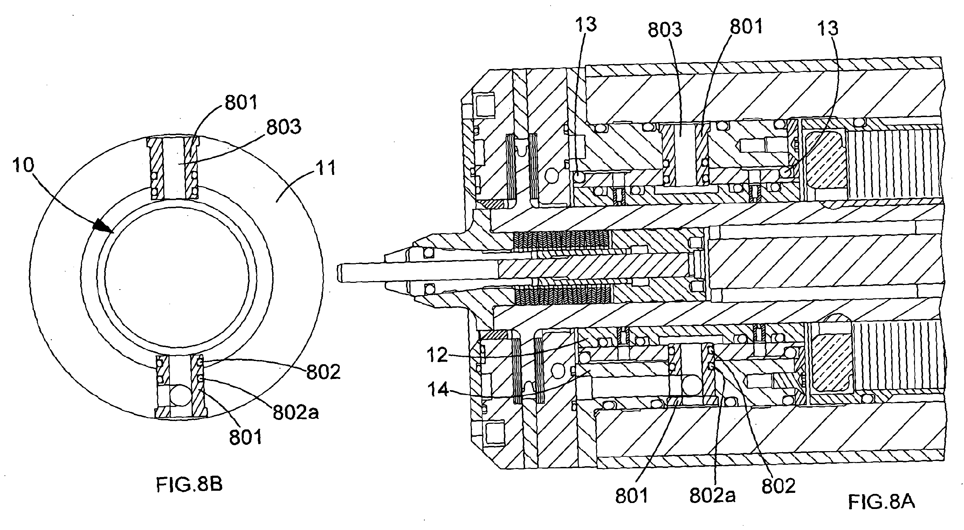

Figures 6A and 6B schematically show part of a third PCB drilling spindle according to the invention which is similar to that shown in Figure 2. Where description of the spindle shown in Figures 6A and 6B is omitted it should be considered that these aspects are or at least can be the same as in the spindle and bearings described above except where context does not allow. The same is true in respect of the spindles shown in Figures 7A, 7B, 8A and 8B.

Figure 6A shows a section through a front portion of the PCB drilling spindle along its axis and Figure 6B shows a section through the spindle across its axis.

As mentioned above the structure and operation of the third drilling spindle shown in Figures 6A and 6B is similar to that shown in Figure 2 and described above in relation to Figures 2 to 5A and 5B. However a slightly, but importantly, different form of radial air bearing assemby 1 is used in this drilling spindle.

Figures 6A and 6B show one of the radial air bearing assemblies 1 of the spindle, but as in the case of the spindle shown in Figure 2, there will in fact be two radial air bearing assemblies. In terms of the features of interest in the present case, these two radial air bearing assemblies 1 provided in the third PCB drilling spindle are the same as one another.

The PCB drilling spindle again comprises a spindle body portion 2 within which is provided each radial air bearing assembly 1 within which, in turn, a shaft 3is journalled.

Each radial air bearing assembly 1 again comprises an outer bearing portion 11 within which is mounted an inner bearing portion 10 with damping O rings 13 provided therebetween. Again the inner bearing portion 10 comprises an inner shell bearing portion 12 and an intermediate sleeve portion 14. Further a cooling channel 7 is defined between the inner shell bearing portion 12 and intermediate sleeve portion 14. An inlet 71 into the coolant channel 7 is provided and an outlet 72 from the coolant channel 7 is also provided. As in the spindles described above, this inlet 71 and outlet 72 are provided in the outer curved surface of the intermediate sleeve portion 14 and the outlet and inlet are surrounded by respective O rings 71b and 72b seated in respective O ring grooves 71a and 72a. Thus in all these respects this radial air bearing assembly is the same as that shown in and described with reference to Figures 2, 3, 4A and 4B.

However in the present embodiment an anti-rotation plug or pin 601 is provided to resist relative rotation between the outer bearing portion 11 and the inner bearing portion 10. The plug 601 is shown in situ in Figure 6B and shown separately from the spindle in Figure 6A.

As best seen in Figure 6B, the plug 601 is received in an appropriate bore in the outer bearing portion 11 and projects into the inner bearing portion 10. In particular an end of the plug 601 is received in a bore in the inner bearing portion 10 which, in at least this embodiment, is in the intermediate sleeve portion 14.

The plug 601 is a push fit with the outer bearing portion 11 and inner bearing portion 10. An O ring 602 is provided around the plug 601 at the end which is received in the intermediate sleeve portion 14. Thus contact between the plug 601 and inner bearing portion 10 is only via the resilient material of the O ring 602. On the other hand there is direct metal to metal contact between the plug 601 and the outer bearing portion 11.

The O ring 602 provides a resilience between the plug 601 and the inner bearing portion 10 which ensures that the coupling between the outer bearing portion 11 and inner bearing portion provided by the plug is resilient. This means that whilst the plug 601 can serve in practical terms to prevent relative rotation between the inner bearing portion 10 and outer bearing portion 11, the resilient mounting of the inner bearing portion 10 in the outer bearing portion 11 is not destroyed. Further the O ring 602 on the plug 601 acts as a seal to ensure that coolant in the coolant channel 7 cannot escape past the plug 601.

Whilst the plug 601 is a push fit in the outer bearing portion 11 and inner bearing portion 10, it is retained in position by virtue of the radial air bearing assembly 1 being housed within a bore of the body portion 2 of the spindle. Of course in other alternatives the plug 1 might be retained by other means.

With the design of Figures 6A and 6B, additional O rings 13a which surround the outer curved surface of the intermediate sleeve portion 14 (as do the damping O rings 13) are provided axially either side of the location at which the plug 601 is provided. These additional O rings 13a are provided to seal the air path to the jets 8 in the inner bearing portion 10.

The provision of these additional O rings 13a which surround the curved surface of the intermediate sleeve portion 14 (so that the axis of the ring of each O ring is coaxial with the bearing) can have a disadvantage in that it makes the bearing stiffer. This can be such that the desirable damping effect of having the inner bearing portion 10 mounted in O rings relative to the outer bearing portion 11 is disrupted. If the bearing becomes too stiff then the desired degree of vibration may not be absorbed. Thus whilst the spindle shown in Figure 6A and 6B can help prevent undesirable relative rotation between the inner bearing portion 10 and the outer bearing portion 11, the overall damping performance of the bearing may be less than optimal.

Figure 7A and 7B show a fourth PCB drilling spindle according to the invention which is similar to that shown in Figure 6A and 6B but modified to help improve the damping characteristics.

In the drilling spindle shown in Figures 7A and 7B, the plug 601 carries two O rings 602 and 602a. The first of these O rings 602 is again provided towards the end of the plug 601 and contacts against and seals against the intermediate sleeve portion 14. The further O ring 602a is again provided around the plug 601. This O ring 602a is, however, provided closer to the head of the plug 601. Furthermore this second O ring 602a contacts with and seals with the outer bearing portion 11. This means that there is a sealed air path to the jets 8 which is not compromised by the provision of the plug 601.This can be best seen by considering Figure 7A.

Thus in the drilling spindle shown in Figures 7A and 7B a second pair of O rings 13a as included in the spindle shown in Figure 6A can be omitted. Thus the adverse effect on the damping characteristics of the bearing due to those O rings 13a included in the spindle of Figure 6A can be avoided.

Note that in Figure 7A the plug 601 is shown in situ in the spindle. Furthermore note that the section on which Figure 7A is taken is different than the section on which Figure 6A is taken. The section in Figure 7A is taken along a line which is such that the plug can be seen in situ whereas the section in Figure 6A is taken along a line where the inlets and outlets 71, 72 into the cooling channel 7 may be seen. Thus these sections are taken at 90 degrees to one another.

Note that whilst the second O ring 602a provided on the plug 601 means that there is a seal between the plug 601 and the outer bearing portion 11, this does not necessarily mean that there is a resilient coupling between these two parts. The head of the plug 601 and the remainder of the shank not carrying the O ring 602a may still be in intimate contact with the outer bearing portion 11. That is to say the desired resilience in the anti-rotation coupling between the outer bearing portion 11 and the inner bearing portion 10 may be provided by the O ring 602 which contacts with the inner bearing portion 10, with the second O ring 602a having little or no influence on this.

In both of the embodiments shown in Figures 6A, 6B and 7A, 7B the plug 601 is provided axially centrally along the bearing assembly 1 and axially centrally along the bearing face of the bearing. Furthermore the plug 601 is aligned with the coolant channel 7.The plug 601 is also provided separately from the inlet and outlets of the coolant channel 7 and is spaced from these. In the present embodiments the plug 601 is spaced by 90 degrees from each of the inlet and outlet 71, 72.

Figures 8A and 8B show a fifth drilling spindle according to the invention which has an alternative arrangement to those described above in Figures 6A, 6B, 7A and 7B.

Again provision is made to help prevent the inner bearing portion 10 from rotation relative to the outer bearing portion 11. However in this case two plugs 801 are provided for this purpose and their function is integrated into that of providing inlets and outlets to the coolant channel 7. Thus as best seen in Figure 8B in the spindle shown in Figures 8A and 8B the inlet 71 and outlet 72 of the spindles described above and in particular their surrounding O rings 71b 72b are replaced by the plugs 801. Each plug 801 has a through hole or bore 803. These bores run axially through the plug 801. In some cases an outer end (i.e. that away from the coolant channel 7) may be blanked. Each through hole or bore 803 is connected with appropriate feed paths in the outer bearing portion 11 for feeding coolant towards or away from the coolant channel 7.

Each plug 801 carries a pair of O rings 802 and 802a. Again a first of the O rings 802 is provided towards the end of the plug 801 and both seals with and provides resilient coupling between the inner bearing portion 10 and the plug 801. The second O ring 802a provides sealing between the plug 801 and the outer bearing portion 11.

Thus together the two O rings 802 and 802a provide seals to prevent the plug 801 breaking the integrity of the air supply path to the jets 8 and the first O ring 802 also provides a seal to ensure integrity of the coolant channel 7 in the inner bearing portion 10. Again the plugs 801 can together provide resistance to relative rotation between the outer and inner bearing portions 11, 10 whilst the resilience in the coupling between the plug 801 and the intermediate sleeve portion 14 can help ensure that the overall damping characteristics of the spindle are not destroyed. Note that the arrangement shown in Figures 8A and 8B is likely to lead to a stiffer spindle than the arrangement shown in Figures 7A and 7B. Thus currently the arrangement shown in 7A and 7B is preferred since although more components are used, in most circumstances it will be easier to provide a spindle with better damping characteristics using the arrangement of Figures 7A and 7B.

Having said this in some circumstances the arrangement of Figures 8A and 8B may be preferable, for example where an intrinsically more stiff arrangement can be tolerated or mitigated against.

The third, fourth and fifth drilling spindles as shown in Figures 6A to 8B are each examples of spindles including bearing assemblies including radial anti-rotation plugs or pins. That is the anti-rotation plugs extend radially from the inner bearing portion 10 into the outer bearing portion 11.

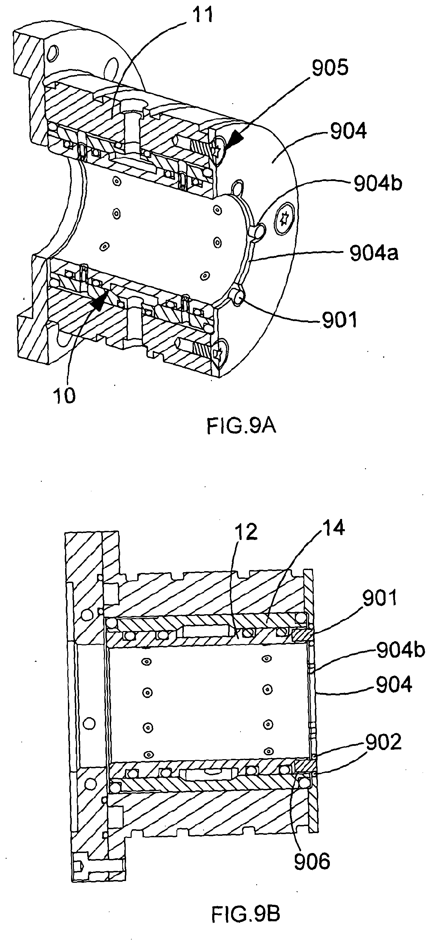

Figures 9A and 9B show a modified bearing assembly according to the invention which is arranged for resisting relative rotation between the inner bearing portion 10 and the outer bearing portion 11 by means of axial anti-rotation plugs or pins 901. Figure 9A is an isometric sectional view along one diameter through the bearing assembly which does not pass through the plugs 901 and Figure 9B is a simple section along another diameter that does pass through the plugs 941.

The modified bearing assembly of Figures 9A and 9B is similar to that shown in Figure 3. The only significant differences are the provision of an end cover 904 as part of the outer bearing portion 11, six axial anti-rotation plugs 901 (only 3 of which can be seen in Figure 9A and only four of which can be seen in Figure 9B) and six corresponding O rings 902 (only 2 of which are shown in Figure 9B and which are omitted from Figure 9A).

As will be appreciated, two such modified bearing assemblies may be used in a spindle of the type shown in Figure 2. Detailed description of the aspects of the bearing assembly of Figures 9A and 9B which are common to the bearing assembly of Figure 3 are omitted for brevity, and will be referred to using the same reference numerals.

The end cover 904 is mounted (via screws 905) to the remainder of the outer bearing portion 11. It extends radially inwards of the main bore of the outer bearing portion 11 so as to project at least partially over the end of the inner bearing portion 10 - specifically the intermediate portion 14 and the inner shell bearing portion 12.

The inner peripheral edge 904a of the end cover 904 defines a plurality, in this case six, slots 904b. Each of these slots receives a respective one of the anti-rotation plugs 901. Whilst one end of each plug 901 is received in its respective slot 904b the other end is received in a respective bore 906 in the inner bearing portion 10 - in this embodiment, specifically, in the inner shell bearing portion 12.

In the present embodiment an O ring 902 is carried by each plug 901 so as to be between the respective plug 901 and slot 904b. However it has been found that in at least some circumstances these O rings 902 may be omitted without destroying the resilient performance of the bearing assembly. This can be because the arrangement may be such that only point contact may occur between the plugs 101 and the end cover 904 in the absence of O rings 902, which can allow sufficient resilience within the assembly for successful operation under certain conditions.

Note that the provision of slots 904b in the end cover 904 as opposed to closely fitting apertures/bores can help in machining, assembly and resilient performance (especially if the O rings 902 are omitted). More generally the plugs 901 may be mounted in one of the inner and outer bearing portions 10, 11 and received in slots in the other, with or without O rings.

## Claims

1. A gas bearing assembly for a gas bearing spindle, the assembly comprising a housing portion (11) and an inner radial bearing portion (10) disposed within and resiliently mounted relative to the housing portion (11), the inner radial bearing portion (10) comprising an inner shell bearing portion (12) having a bearing face, and an intermediate sleeve portion (14) which is disposed between the inner shell bearing portion (12) and the housing portion (11), wherein a liquid coolant channel (7) is provided between the inner bearing shell portion (12) and the intermediate sleeve portion (14), **characterised by**
the assembly further comprising an anti-rotation plug (601, 801 901) which is received in both the housing portion (11) and the inner bearing portion (10) to couple the housing portion and the inner bearing portion against relative rotation.

2. A gas bearing assembly according to claim 1 in which there is a resilient member (602, 802, 902) provided between the plug (601, 801, 901) and at least one of the housing portion (11) and the inner bearing portion (10) so that there is resilience in the coupling between the housing portion and the inner bearing portion formed by the plug (601, 801, 901).

3. A gas bearing assembly according to claim 2 in which the resilient member (602, 802, 902) provided between the plug and at least one of the housing portion and the inner bearing portion comprises an O ring (602, 802, 902) carried on the plug (601, 801, 901).

4. A gas bearing assembly according to claim 3 in which the O ring (602, 802, 902) acts as a seal.

5. A gas bearing assembly according to any preceding claim in which the plug (801) has a through hole (803) which is part of a fluid feed path in the bearing assembly.

6. A gas bearing assembly according to any preceding claim in which a pair of resilient members (802, 802a) is provided between the plug (801) on the one hand and the housing portion (11) and the inner bearing portion (10) on the other hand with one of the resilient members (802a) being provided between the plug (801) and the housing portion (11) and the other (802) being provided between the plug (801) and the inner bearing portion (10).

7. A gas bearing assembly according to any preceding claim comprising a pair of anti-rotation plugs (801), which are diametrically opposed.

8. A gas bearing assembly according to any preceding claim in which the or each plug (601, 801, 901) is a push fit in the housing portion and/or the inner bearing portion.

9. A gas bearing assembly according to claim 8, in which the plug (801) is retained in position by virtue of the housing portion being received in a bore of a spindle body portion, with a head of the plug contacting with the wall of the borne.

10. A gas bearing assembly according to any preceding claim in which there is a pair of anti-rotation plugs (801) with one acting as an inlet to the coolant channel and another acting as an outlet of the coolant channel.

11. A gas bearing assembly according to any preceding claim in which the or each plug (801) is provided axially centrally relative to the bearing face.

12. A gas bearing assembly according to any preceding claim in which the or each plug (801) is axially aligned with the coolant channel (7).

13. A gas bearing assembly according to any preceding claim in which the or each plug (801) extends radially from the housing portion into the inner bearing portion.

14. A gas bearing assembly according to any one of claims 1 to 10 in which the or each plug (901) extends axially from the housing portion into the inner bearing portion.

15. A gas bearing spindle comprising a gas bearing assembly according to any preceding claim and a shaft journalled within the bearing assembly.

## Patentansprüche

1. Eine Gaslageranordnung für eine Gaslagerspindel, die Anordnung umfassend einen Gehäuseabschnitt (11) und einen inneren Radiallagerabschnitt (10), der innerhalb des Gehäuseabschnitts (11) angeordnet und gegenüber diesem elastisch montiert ist, wobei der innere Radiallagerabschnitt (10) einen inneren Schalenlagerabschnitt (12), der eine Lagerfläche aufweist, und einen dazwischenliegenden Hülsenabschnitt (14), welcher zwischen dem inneren Schalenlagerabschnitt (12) und dem Gehäuseabschnitt (11) liegt, umfasst, wobei ein Flüssigkühlmittelkanal (7) zwischen dem inneren Lagerschalenabschnitt (12) und dem dazwischenliegenden Hülsenabschnitt (14) vorgesehen ist, **dadurch gekennzeichnet, dass**
die Anordnung ferner einen Antirotationsstopfen (601, 801, 901) umfasst, welcher sowohl in dem Gehäuseabschnitt (11) als auch in dem inneren Lagerabschnitt (10) aufgenommen wird, um den Gehäuseabschnitt und den inneren Lagerabschnitt gegen relative Rotation zu koppeln.

2. Eine Gaslageranordnung gemäß Anspruch 1, bei welcher ein elastisches Element (602, 802, 902) zwischen dem Stopfen (601, 801, 901) und wenigstens dem Gehäuseabschnitt (11) oder dem inneren Lagerabschnitt (10) oder beiden vorgesehen ist, sodass Elastizität in der Kopplung zwischen dem Gehäuseabschnitt und dem inneren Lagerabschnitt vorliegt, die durch den Stopfen (601, 801, 901) ausgebildet wird.

3. Eine Gaslageranordnung gemäß Anspruch 2, bei welcher das elastische Element (602, 802, 902), das zwischen dem Stopfen und wenigstens dem Gehäuseabschnitt oder dem inneren Lagerabschnitt oder beiden vorgesehen ist, einen O-Ring (602, 802, 902) umfasst, der auf dem Stopfen (601, 801, 901) getragen wird.

4. Eine Gaslageranordnung gemäß Anspruch 3, bei welcher der O-Ring (602, 802, 902) als eine Dichtung wirkt.

5. Eine Gaslageranordnung gemäß einem der vorherigen Ansprüche, in welcher der Stopfen (801) eine Durchgangsbohrung (803) aufweist, welche Teil eines Flüssigkeitszuführpfads in der Lageranordnung ist.

6. Eine Gaslageranordnung gemäß einem der vorherigen Ansprüche, bei welcher ein Paar an elastischen Elementen (802, 802a) zwischen dem Stopfen (801) einerseits und dem Gehäuseabschnitt sowie dem inneren Lagerabschnitt (10) andererseits vorgesehen ist, wobei eines der elastischen Elemente (802a) zwischen dem Stopfen (801) und dem Gehäuseabschnitt (11) vorgesehen ist und das andere (802) zwischen dem Stopfen (801) und dem inneren Lagerabschnitt (10) vorgesehen ist.

7. Eine Gaslageranordnung gemäß einem der vorherigen Ansprüche, umfassend ein Paar an Antirotationsstopfen (801), welche diametral gegenüberliegend sind.

8. Eine Gaslageranordnung gemäß einem der vorherigen Ansprüche, bei welcher der oder jeder Stopfen (601, 801, 901) ein Schiebegleitsitz in dem Gehäuseabschnitt und/oder dem inneren Lagerabschnitt ist.

9. Eine Gaslageranordnung gemäß Anspruch 8, bei welcher der Stopfen (801) aufgrund des Gehäuses, das in einer Bohrung eines Spindelkörperabschnitts aufgenommen wird, in einer Position gehalten wird, wobei ein Kopf des Stopfens die Wand der Bohrung berührt.

10. Eine Gaslageranordnung gemäß einem der vorherigen Ansprüche, bei welcher es ein Paar an Antirotationsstopfen (801) gibt, wobei einer als ein Einlass zu dem Kühlmittelkanal wirkt und ein anderer als ein Auslass von dem Kühlmittelkanal wirkt.

11. Eine Gaslageranordnung gemäß einem der vorherigen Ansprüche, bei welcher der oder jeder Stopfen (801) axial zentral relativ zu der Lagerfläche vorgesehen ist.

12. Eine Gaslageranordnung gemäß einem der vorherigen Ansprüche, bei welcher der oder jeder Stopfen (801) axial fluchtend zu dem Kühlmittelkanal (7) ist.

13. Eine Gaslageranordnung gemäß einem der vorherigen Ansprüche, bei welcher der oder jeder Stopfen (801) sich radial von dem Gehäuseabschnitt in den inneren Lagerabschnitt hinein erstreckt.

14. Eine Gaslageranordnung gemäß einem der Ansprüche 1 bis 10, bei welcher der oder jeder Stopfen (901) sich axial von dem Gehäuseabschnitt in den inneren Lagerabschnitt hinein erstreckt.

15. Eine Gaslagerspindel, umfassend eine Gaslageranordnung gemäß einem der vorherigen Ansprüche und eine innerhalb der Lageranordnung eingesetzte Welle.

## Revendications

1. Ensemble de palier à gaz pour un axe à palier à gaz, l'ensemble comprenant une partie de logement (11) et une partie de palier radiale interne (10) disposée à l'intérieur et montée de manière résiliente par rapport à la partie de logement (11), la partie de palier radiale interne (10) comprenant une partie de palier de coque interne (12) ayant une face de palier et une partie de manchon intermédiaire (14) qui est disposée entre la partie de palier de coque interne (12) et la partie de logement (11) dans lequel un canal de réfrigérant liquide (7) est prévu entre la partie de coque de palier interne (12) et la partie de manchon intermédiaire (14), **caractérisé par** :
l'ensemble comprenant en outre un bouchon anti-rotation (601, 801, 901) qui est reçu à la fois dans la partie de logement (11) et la partie de palier interne (10) pour coupler la partie de logement et la partie de palier interne contre la rotation relative.

2. Ensemble de palier à gaz selon la revendication 1, dans lequel on prévoit un élément résilient (602, 802, 902) prévu entre le bouchon (601, 801, 901) et au moins l'une parmi la partie de logement (11) et la partie de palier interne (10), de sorte qu'il existe une résilience dans le couplage entre la partie de logement et la partie de palier interne formée par le bouchon (601, 801, 901).

3. Ensemble de palier à gaz selon la revendication 2, dans lequel l'élément résilient (602, 802, 902) prévu entre le bouchon et au moins l'une parmi la partie de logement et la partie de palier interne comprend un joint torique (602, 802, 902) porté sur le bouchon (601, 801, 901).

4. Ensemble de palier à gaz selon la revendication 3, dans lequel le joint torique (602, 802, 902) sert de joint d'étanchéité.

5. Ensemble de palier à gaz selon l'une quelconque des revendications précédentes, dans lequel le bouchon (801) a un trou débouchant (803) qui fait partie d'une trajectoire d'alimentation en fluide dans l'ensemble de palier.

6. Ensemble de palier à gaz selon l'une quelconque des revendications précédentes, dans lequel une paire d'éléments résilients (802, 802a) est prévue entre le bouchon (801) d'une part et la partie de logement (11) et la partie de palier interne (10) d'autre part avec l'un des éléments résilients (802a) qui est prévu entre le bouchon (801) et la partie de logement (11) et l'autre (802) qui est prévu entre le bouchon (801) et la partie de palier interne (10).

7. Ensemble de palier à gaz selon l'une quelconque des revendications précédentes, comprenant une paire de bouchons anti-rotation (801), qui sont diamétralement opposés.

8. Ensemble de palier à gaz selon l'une quelconque des revendications précédentes, dans lequel le ou chaque bouchon (601, 801, 901) est un ajustement correct dans la partie de logement et/ou la partie de palier interne.

9. Ensemble de palier à gaz selon la revendication 8, dans lequel le bouchon (801) est retenu en position en vertu de la partie de logement qui est reçue dans un alésage d'une partie de corps d'axe, avec une tête du bouchon en contact avec la paroi de l'alésage.

10. Ensemble de palier à gaz selon l'une quelconque des revendications précédentes, dans lequel on trouve une paire de bouchons anti-rotation (801) avec un qui sert d'entrée dans le canal de réfrigérant et un autre qui sert de sortie du canal de réfrigérant.

11. Ensemble de palier à gaz selon l'une quelconque des revendications précédentes, dans lequel le ou chaque bouchon (801) est prévu de manière axialement centrale par rapport à la face de palier.

12. Ensemble de palier à gaz selon l'une quelconque des revendications précédentes, dans lequel le ou chaque bouchon (801) est axialement aligné avec le canal de réfrigérant (7).

13. Ensemble de palier à gaz selon l'une quelconque des revendications précédentes, dans lequel le ou chaque bouchon (801) s'étend radialement à partir de la partie de logement dans la partie de palier interne.

14. Ensemble de palier à gaz selon l'une quelconque des revendications 1 à 10, dans lequel le ou chaque bouchon (901) s'étend axialement à partir de la partie de logement dans la partie de palier interne.

15. Axe à palier à gaz comprenant un ensemble de palier à gaz selon l'une quelconque des revendications précédentes, et un arbre tourillonné à l'intérieur de l'ensemble de palier.
